# EUROPÄISCHE PATENTSCHRIFT

(11) **EP 3 140 138 B1**
(45) Veröffentlichungstag und Bekanntmachung des Hinweises auf die Patenterteilung: **18.03.2020**
(21) Anmeldenummer: 15715250.5
(22) Anmeldetag: 09.04.2015
(51) Int. Cl.: B60G 13/14, B60G 17/08

(54) **AKTIVES DÄMPFERSYSTEM FÜR EIN FAHRZEUG**
ACTIVE DAMPER SYSTEM FOR A VEHICLE
SYSTÈME D'AMORTISSEMENT ACTIF POUR VÉHICULE

(30) Priorität: 05.05.2014 DE 102014208320
(43) Veröffentlichungstag der Anmeldung: 15.03.2017
(73) Patentinhaber: Bayerische Motoren Werke Aktiengesellschaft, 80809 München (DE)
(72) Erfinder: SCHMIDT, Roland, 82131 Stockdorf (DE); SCHOLZ, Hubert, 81543 München (DE)
(86) Internationale Anmeldenummer: PCT/EP2015/057685
(87) Internationale Veröffentlichungsnummer: WO 2015/169529

(56) Entgegenhaltungen:
- EP-A2- 0 424 784
- CN-A- 101 865 237
- CN-U- 201 511 776
- DE-A1-102009 056 874
- FR-A1- 2 660 386
- US-A- 5 222 759
- US-A1- 2013 104 534

## Beschreibung

Vorliegende Erfindung betrifft ein aktives Dämpfersystem für ein Fahrzeug, insbesondere Kraftfahrzeug.

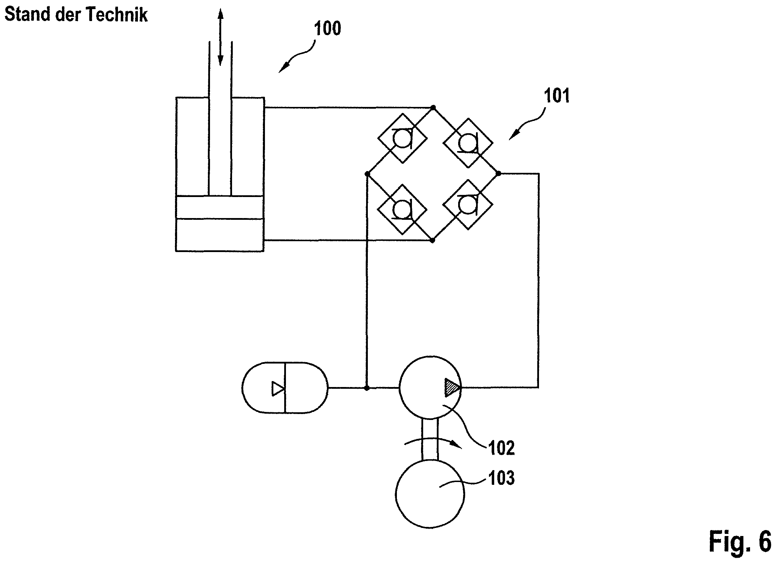

Dämpfersysteme für ein Fahrzeug umfassen üblicherweise eine Dämpfereinheit mit einem Zylinder und einem darin geführten Kolben. Der Zylinder ist mit Hydrauliköl gefüllt. Beiliegende Figur 6 zeigt eine Anordnung nach dem Stand der Technik zum Rekuperieren von Dämpferleistung. Gezeigt ist eine Dämpfereinheit 100 an die vier Rückschlagventile 101 angeschlossen sind. Die Rückschlagventile 101 sind mit einer Pumpe 102 verbunden. An die Pumpe 102 ist ein Generator 103 zum Erzeugen elektrischer Energie angeschlossen. Durch die vier Rückschlagventile 101 wird erreicht, dass es nur eine Drehrichtung für die Pumpe 102 und somit für den Generator 103 sowohl beim Ein- als auch beim Ausfedern gibt. Das hat den Vorteil, dass die rotierenden Massen der Pumpe 102 und des Generators 103 ihre Drehrichtung nicht ändern und daher im Wesentlichen nicht die Dynamik des Systems begrenzen. Allerdings ist diese Bauart für ein aktives Stellen des Kolbens gegenüber dem Zylinder, und somit für eine aktive Dämpfung, nicht geeignet, da die Hydraulikflüssigkeit stets über die entsprechenden Rückschlagventile 101 zum Pumpeneingang zurückströmt und keine Stellkraft in der Dämpfereinheit 100 erzeugt werden kann.

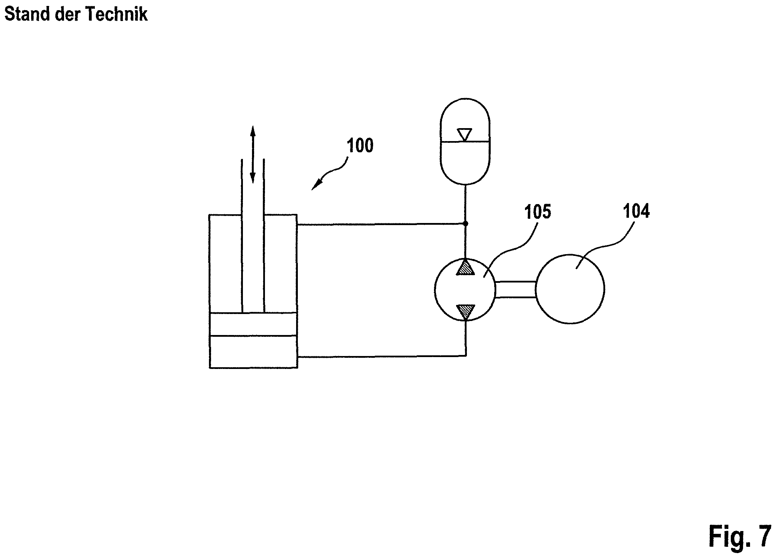

Figur 7 zeigt eine weitere Anordnung nach dem Stand der Technik mit einer Dämpfereinheit 100, einer Pumpe 105 und einer elektrischen Maschine 104. Die Pumpe 105 kann auch als Turbine betrieben werden. Dementsprechend kann die elektrische Maschine 104 sowohl elektromotorisch als auch generatorisch betrieben werden. Mit der Anordnung nach Figur 7 ist ein aktives Stellen des Kolbens im Zylinder möglich. Allerdings ändern hier die rotierenden Massen der elektrischen Maschine 104 und der Pumpe 105 ihre Drehrichtung, wodurch die Dynamik des Systems begrenzt ist und sich ein geringer Wirkungsgrad für die Rekuperation ergibt.

Weiterer Stand der Technik ist die US2013 /0104534 A1, die den Oberbegriff des Anspruchs 1 offenbart, und die FR 2 660 386 A1.

Es ist Aufgabe vorliegender Erfindung ein aktives Dämpfersystem für ein Fahrzeug anzugeben, das bei kostengünstiger Herstellung und sicherem Betrieb sowohl ein aktives Stellen der Dämpfereinheit als auch eine wirkungsgradoptimale Rekuperation ermöglicht. Insbesondere soll das aktive Dämpfersystem ein aktives Stellen bei größtmöglichem Rekuperationsvermögen ermöglichen. Die Stelldynamik soll deutlich gesteigert werden.

Die Lösung der Aufgabe erfolgt durch die Merkmale des unabhängigen Anspruchs. Die abhängigen Ansprüche haben vorteilhafte Ausgestaltungen der Erfindung zum Gegenstand.

Somit wird die Aufgabe gelöst für ein aktives Dämpfersystem für ein Fahrzeug, insbesondere Kraftfahrzeug. Das aktive Dämpfersystem umfasst eine Dämpfereinheit mit einem Zylinder, einem im Zylinder geführten Kolben und einer mit dem Kolben verbundenen Kolbenstange. Der Kolben teilt den Zylinder in eine erste Kammer und in eine zweite Kammer. Im Kolben und/oder im Boden des Zylinders sind entsprechende Dämpferventile, insbesondere Drosseln, angeordnet. Durch Bewegen des Kolbens im Zylinder wird das Fluid, insbesondere Hydrauliköl, durch die Dämpferventile bewegt, wodurch es zur Dämpfung kommt. Die Dämpfereinheit ist zwischen einer Karosserie und einem Rad des Fahrzeuges angeordnet.

Das aktive Dämpfersystem umfasst des Weiteren eine Pumpe, vorzugsweise Hydraulikpumpe, zum Verändern der Drücke in den beiden Kammern des Zylinders und somit zum Bewegen des Kolbens. Mittels der Hydraulikpumpe ist der Kolben gegenüber dem Zylinder verstellbar. Diese Verstellbarkeit ist unabhängig von einer Anregung durch die Straßenoberfläche möglich. Dadurch handelt es sich um ein aktives Dämpfersystem und nicht um ein adaptives Dämpfersystem. Ferner umfasst das aktive Dämpfersystem ein erstes Ventil und ein mit dem ersten Ventil in Reihe geschaltetes zweites Ventil. Ferner ist ein drittes Ventil und ein mit dem dritten Ventil in Reihe geschaltetes viertes Ventil vorgesehen. Das erste und zweite Ventil sind parallel zum dritten und vierten Ventil angeordnet. Zwischen dem ersten Ventil und dem zweiten Ventil führt eine fluidführende erste Leitung zur ersten Kammer. Zwischen dem dritten Ventil und dem vierten Ventil führt eine fluidführende zweite Leitung zur zweiten Kammer. Zwischen dem ersten Ventil und dem vierten Ventil ist die Niederdruckseite der Pumpe angeschlossen. Zwischen dem zweiten Ventil und dem dritten Ventil ist die Druckseite der Pumpe angeschlossen. Das erste Ventil, das zweite Ventil, das dritte Ventil und das vierte Ventil sind zum wahlweisen Sperren und Freigeben des Fluidflusses schaltbar. Durch diese Schaltbarkeit der vier Ventile ist es möglich, dass die Pumpe in allen Betriebssituationen in die gleiche Richtung dreht. Es ist also möglich, mit einer Drehrichtung der Pumpe sowohl die Dämpfereinheit zu stellen als auch Energie zu rekuperieren.

Vorteilhafterweise ist vorgesehen, dass das erste Ventil und/oder das zweite Ventil und/oder das dritte Ventil und/oder das vierte Ventil sperrbare Rückschlagventile sind. Diese Rückschlagventile sperren stets in ihrer Sperrrichtung. Dafür ist üblicherweise ein Ventilkörper, z.B. eine Kugel, innerhalb der Rückschlagventile vorgesehen, wobei der Ventilkörper in Sperrrichtung durch den Fluiddruck gegen einen Ventilsitz gedrückt wird. Die Rückschlagventile sind sperrbar und somit schaltbar, sodass bei entsprechender Schaltbetätigung auch ein Fluidfluss entgegen der Sperrrichtung blockiert ist. Durch die Ausgestaltung der vier Ventile als Rückschlagventile ist eine sehr einfache Bauart gegeben, da die Ventile im ungeschalteten Zustand in einer Richtung sperren und nur zum Blockieren des Fluidflusses auch in entgegengesetzter Richtung geschaltet werden müssen.

Das aktive Dämpfersystem umfasst vorzugsweise eine elektrische Maschine, die mit der Pumpe wirkverbunden ist. Die elektrische Maschine kann zum Antreiben der Pumpe elektromotorisch betrieben werden. Des Weiteren kann die elektrische Maschine zum Erzeugen elektrischer Energie generatorisch betrieben werden. Die Pumpe wirkt dabei als Turbine. Sowohl die Pumpe als auch die elektrische Maschine weisen in dem erfindungsgemäßen aktiven Dämpfersystem nur eine Drehrichtung auf.

Ferner ist bevorzugt eine Steuereinheit vorgesehen. Die Steuereinheit ist zum Schalten der vier Ventile ausgebildet. Die Steuereinheit schaltet die vier Ventile, sodass sowohl im elektromotorischen Betrieb als auch im generatorischen Betrieb die Pumpe und die elektrische Maschine stets in derselben Richtung drehen.

Mittels der Steuereinheit sind bevorzugt jeweils zwei der Ventile paarweise ansteuerbar, sodass das erste Ventil und das dritte Ventil stets die gleiche Schaltstellung aufweisen, und sodass das zweite Ventil und das vierte Ventil stets die gleiche Schaltstellung aufweisen.

In bevorzugter Ausführung umfasst die Steuereinheit zum Schalten der vier Ventile ein hydraulisches Wegeventil. Das hydraulische Wegeventil ist über Steuerleitungen an die vier Ventile angeschlossen. Über eine Druckleitung ist das Wegeventil an die Druckseite der Pumpe angeschlossen. In bevorzugter Ausführung wird ein 4/3-Wegeventil verwendet. Alternativ zur Verwendung des Wegeventils können die vier Ventile auch über vier separate elektromagnetische oder elektromechanische Aktoren betätigt werden.

Das aktive Dämpfersystem umfasst vorzugsweise eine fluidleitende direkte Verbindung zwischen der Druckseite und der Niederdruckseite der Pumpe. Diese direkte fluidleitende Verbindung führt unter Umgehung der vier Ventile direkt von der Druckseite zur Niederdruckseite der Pumpe. Vorteilhafterweise ist diese direkte Verbindung mittels der Steuereinheit schaltbar. Dabei ist insbesondere vorgesehen, dass für die Schaltbarkeit der direkten Verbindung ein erstes Zusatzventil angeordnet wird. Dieses erste Zusatzventil ist vorteilhafterweise ein Sperrventil, das die direkte Verbindung wahlweise freigibt oder sperrt. Alternativ zur Verwendung des Zusatzventils kann die Schaltbarkeit der direkten Verbindung auch in das oben beschriebene Wegeventil integriert werden. Dabei wird vorteilhafterweise ein 6/3-Wegeventil verwendet.

Die Verwendung dieser direkten Verbindung zwischen der Druckseite und der Niederdruckseite hat den Vorteil, dass die Pumpe auf Drehzahl gehalten werden kann. Der Fluidstrom kann dabei zumindest teilweise über die direkte Verbindung zur Niederdruckseite zurückfließen. Dadurch lässt sich der Fluiddruck feinfühlig und hochdynamisch regeln, da die Pumpe nicht aus dem Stillstand beschleunigt werden muss. In besonders bevorzugter Ausführung ist das erste Zusatzventil oder dessen in das Wegeventil integrierte Funktion als Proportionalventil ausgeführt, sodass die Durchflussmenge entsprechend stetig regelbar ist.

Alternativ kann der Rückfluss von der Druckseite der Pumpe zur Niederdruckseite der Pumpe auch über das zweite und erste Ventil oder das dritte und vierte Ventil erfolgen. Für diese Funktion wird das oben beschriebene 4/3-Wegeventil als Proportionalventil ausgebildet. Durch entsprechende Stellung dieses Wegeventils ist somit auch ein Rückfluss von der Druckseite zur Niederdruckseite möglich.

Vorteilhafterweise umfasst das aktive Dämpfersystem einen ersten Druckspeicher, der zwischen dem ersten Ventil und dem vierten Ventil angeschlossen ist. Somit ist der erste Druckspeicher an der Niederdruckseite der Pumpe angeschlossen. Ferner ist vorteilhafterweise ein zweiter Druckspeicher vorgesehen, der zwischen dem zweiten Ventil und dem dritten Ventil angeschlossen ist. Der zweite Druckspeicher ist somit an der Druckseite der Pumpe angeschlossen. Am Eingang des zweiten Druckspeichers befindet sich vorteilhafterweise ein zweites Zusatzventil zum Steuern des Zu- und Abflusses am zweiten Druckspeicher. Insbesondere weist das zweite Zusatzventil eine erste Schaltstellung auf, in der lediglich ein Fluidfluss in den zweiten Druckspeicher möglich ist, und eine zweite Schaltstellung, in der ein Fluidfluss in beide Richtungen, vorteilhafterweise gedrosselt, möglich ist.

Die Ergänzung des aktiven Dämpfersystems um den ersten und zweiten Druckspeicher erlaubt es, im aktiven Modus, also beim elektromotorischen Betrieb der elektrischen Maschine, Pumpenleistung zwischenzuspeichern. Lastspitzen zum Stellen großer Dämpferwege bei großen Dämpfergeschwindigkeiten können damit abgedeckt werden. Vorteilhafterweise sind der erste und zweite Druckspeicher annähernd gleich groß, sodass die Volumen entsprechend zwischen der Druck- und Niederdruckseite verschoben werden können.

Darüber hinaus ist vorteilhafterweise ein drittes Zusatzventil zum Absperren der Druckseite der Pumpe vorgesehen. Dieses dritte Zusatzventil befindet sich insbesondere direkt an der Druckseite der Pumpe. Das dritte Zusatzventil erlaubt es, den Pumpenausgang abzusperren. In besonderen Fahrsituationen, in denen der Dämpfer permanent Haltekraft erzeugen muss, wie beispielsweise die Wankabstützung bei langer Kurvenfahrt, müsste die elektrische Maschine ständig bestromt werden. Dies führt zu Überhitzung der elektrischen Maschine und zu einer starken Belastung des Bordnetzes. Durch Betätigen des dritten Zusatzventils und somit durch Absperren der Druckseite der Pumpe kann die elektrische Maschine in diesen Situationen abgestellt werden. Dabei wird vorteilhafterweise das zweite Zusatzventil geschaltet, sodass der zweite Druckspeicher, insbesondere über eine Drossel, an das System angebunden ist und als Tragfeder wirkt. Die vorteilhafte Drossel im zweiten Zusatzventil wirkt dabei dämpfend.

Die Betätigung des Wegeventils und/oder ersten Zusatzventils und/oder zweiten Zusatzventils und/oder dritten Zusatzventils erfolgt vorteilhafterweise hydraulisch oder elektromagnetisch oder elektromechanisch.

Des Weiteren ist vorteilhafterweise ein weiterer Druckspeicher vorgesehen. Dieser weitere Druckspeicher dient zum Ausgleich des verdrängten Volumens beim Einfedern der Kolbenstange. Bei einem Zweirohrdämpfer kann dieser weitere Druckspeicher in der doppelten Zylinderwand angeordnet werden. Allerdings ist es auch möglich, die Funktion des weiteren Druckspeichers in den oben genannten ersten Druckspeicher zu integrieren.

Des Weiteren ist bevorzugt ein Überdruckventil vorgesehen, dass die Pumpe gegen zu hohe Druckstöße absichert.

Weitere Einzelheiten, Merkmale und Vorteile der Erfindung ergeben sich aus der nachfolgenden Beschreibung und den Figuren. Es zeigen:
- Figur 1: ein erfindungsgemäßes aktives Dämpfersystem gemäß einem ersten Ausführungsbeispiel,
- Figur 2: ein erfindungsgemäßes aktives Dämpfersystem gemäß einem zweiten Ausführungsbeispiel,
- Figur 3: ein erfindungsgemäßes aktives Dämpfersystem gemäß einem dritten Ausführungsbeispiel,
- Figur 4: ein erfindungsgemäßes aktives Dämpfersystem gemäß einem vierten Ausführungsbeispiel,
- Figur 5: ein erfindungsgemäßes aktives Dämpfersystem gemäß einem fünften Ausführungsbeispiel, und
- Figuren 6 und 7: zwei Anordnungen nach dem Stand der Technik.

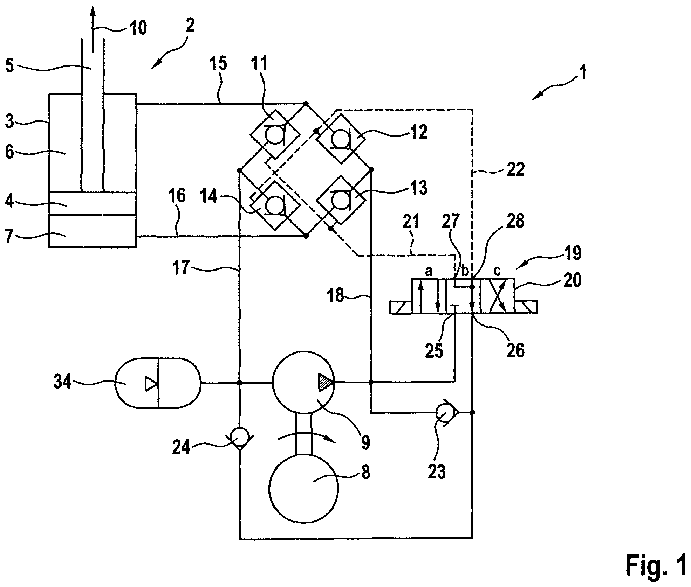

Im Folgenden werden anhand der Figuren 1 bis 5 fünf Ausführungsbeispiele eines aktiven Dämpfersystems 1 für ein Kraftfahrzeug beschrieben. Gleiche beziehungsweise funktional gleiche Bauteile sind in allen Ausführungsbeispielen mit denselben Bezugszeichen versehen. Die Figuren 1 bis 5 zeigen das aktive Dämpfersystem 1 schematisch vereinfacht.

Gemäß Figur 1 umfasst das aktive Dämpfersystem 1 eine Dämpfereinheit 2 mit einem Zylinder 3 und einem im Zylinder 3 geführten Kolben 4. Der Kolben 4 ist mit einer Kolbenstange 5 fest verbunden. Der Kolben 4 unterteilt den Zylinder 3 in eine erste Kammer 6 und in eine zweite Kammer 7. Die Kolbenstange 5 erstreckt sich durch die erste Kammer 6.

Die Dämpfereinheit 2 wird im Fahrzeug zwischen der Karosserie und dem Rad angeordnet, wobei die Kolbenstange 5 karosserieseitig befestigt wird. Mit Bezugszeichen 10 ist die Bewegungsrichtung der Kolbenstange 5 beim Ausfedern eingezeichnet. Die dämpfende Wirkung wird vorzugsweise durch die dargestellte Schaltung und den generatorischen Betrieb von Pumpe 9 und elektrischer Maschine 8 erreicht.

Das aktive Dämpfersystem 1 umfasst des Weiteren eine Pumpe 9, die auch als Turbine betrieben werden kann. Die Pumpe 9 ist mit einer elektrischen Maschine 8 wirkverbunden. Sowohl die elektrische Maschine 8 als auch die Pumpe 9 werden nur in einer Richtung betrieben. Dies gilt für den elektromotorischen Betrieb als auch für den generatorischen Betrieb beim Ein- und Ausfedern.

Des Weiteren umfasst das aktive Dämpfersystem 1 ein erstes Ventil 11, ein zweites Ventil 12, ein drittes Ventil 13 und ein viertes Ventil 14. Im gezeigten Ausführungsbeispiel sind die vier Ventile 11, 12, 13, 14 als sperrbare Rückschlagventile ausgebildet. Das erste Ventil 11 und das zweite Ventil 12 sind in Reihe geschaltet. Das dritte Ventil 13 und das vierte Ventil 14 sind ebenfalls in Reihe geschaltet. Das erste und zweite Ventil 11, 12 sind parallel zum dritten und vierten Ventil 13, 14 angeordnet. Zwischen dem ersten Ventil 11 und dem zweiten Ventil 12 zweigt eine erste Leitung 15 ab. Diese führt zur ersten Kammer 6. Zwischen dem dritten Ventil 13 und dem vierten Ventil 14 zweigt eine zweite Leitung 16 ab. Diese führt zur zweiten Kammer 7.

Zwischen dem ersten Ventil 11 und dem vierten Ventil 14 führt eine Niederdruckleitung 17 zum Eingang der Pumpe 9. Zwischen dem zweiten Ventil 12 und dem dritten Ventil 13 führt eine Druckleitung 18 zur Druckseite der Pumpe 9. Unabhängig vom Schaltzustand sperren die Rückschlagventile zumindest wie Folgt: Das erste Ventil 11 sperrt den Fluidfluss in Richtung der ersten Kammer 6. Das zweite Ventil 12 sperrt den Fluidfluss in Richtung der Druckseite der Pumpe 9. Das dritte Ventil 13 sperrt den Fluidfluss in Richtung der Druckseite der Pumpe 9. Das vierte Ventil 14 sperrt den Fluidfluss in Richtung der zweiten Kammer 7.

Mittels einer Steuereinheit 19 können die Ventile 11, 12, 13, 14 geschaltet werden, sodass sie einen Fluidfluss auch in entgegengesetzter Richtung sperren.

Im ersten Ausführungsbeispiel umfasst die Steuereinheit 19 ein Wegeventil 20, ausgebildet als 4/3-Wegeventil. Von diesem Wegeventil 20 führen eine erste Steuerleitung 21 zum ersten Ventil 11 und zum dritten Ventil 13 und eine zweite Steuerleitung 22 zum zweiten Ventil 12 und zum vierten Ventil14. Die Ventile 11, 12, 13, 14 sind somit über die Steuerleitungen 21, 22 paarweise schaltbar.

Das 4/3-Wegeventil 20 weist vier Anschlüsse 25, 26, 27, 28 auf. Der erste Anschluss 25 und der zweite Anschluss 26 sind mit der Druckseite der Pumpe 9 verbunden. Durch die drei Schaltstellungen a, b, c des Wegeventils 20 sind der erste Anschluss 25 und der zweite Anschluss 26 in verschiedenen Konstellationen sperrbar oder mit dem dritten Anschluss 27 und dem vierten Anschluss 28 verbindbar. Am dritten Anschluss 27 und am vierten Anschluss 28 sind die beiden Steuerleitungen 21, 22 angeschlossen.

Zwischen dem zweiten Anschluss 26 und der Druckseite der Pumpe 9 ist ein erstes Zusatzrückschlagventil 23 angeordnet. Dieses erste Zusatzrückschlagventil 23 sperrt den Fluidstrom in Richtung des Wegeventils 20. Des Weiteren ist der zweite Anschluss 26 über ein zweites Zusatzrückschlagventil 24 mit der Niederdruckseite der Pumpe 9 verbunden. Das zweite Zusatzrückschlagventil 24 sperrt den Fluidfluss von der Niederdruckseite in Richtung des Wegeventils 20.

In Schaltstellung b des Wegeventils 20 sind die beiden Steuerleitungen 21, 22 drucklos, sodass die als Rückschlagventile ausgebildeten Ventile 11, 12, 13, 14 lediglich in eine Richtung sperren. In dieser Schaltstellung entspricht die Funktion der herkömmlichen Anordnung gemäß Figur 6. Das heißt, die Pumpe 9 und die als Generator wirkende elektrische Maschine 8 können in einer Drehrichtung zur Rekuperation betrieben werden.

In Schaltstellung a wird die elektrische Maschine 8 elektromotorisch betrieben. Dabei ist die erste Steuerleitung 21 mit Druck beaufschlagt, wodurch das erste Ventil 11 und das dritte Ventil 13 einen Fluidstrom in beide Richtungen sperren. Das Fluid wird dabei mittels der Pumpe 9 durch das zweite Ventil 12 gepumpt. Da das erste Ventil 11 gesperrt ist, kann das Fluid nicht zurück zur Pumpe 9 fließen und fließt stattdessen in die erste Kammer 6. Der Rücklauf aus der zweiten Kammer 7 erfolgt über das vierte Ventil 14 zum Pumpeneingang (Niederdruckseite). Die Dämpfereinheit 2 fährt dabei aktiv ein.

In Schaltstellung c steht die zweite Steuerleitung 22 unter Druck. Die Fluidströme zum Zylinder 3 beziehungsweise vom Zylinder 3 werden gegenüber der Schaltstellung a umgekehrt, sodass die Dämpfereinheit 2 aktiv ausfährt.

Die beiden Zusatzrückschlagventile 23, 24 sorgen dafür, dass die Steuerleitungen 21, 22 bedarfsgerecht zur Niederdruckseite der Pumpe 9 "drucklos" geschaltet werden, damit die Ventile 11, 12, 13, 14 entsperrt werden.

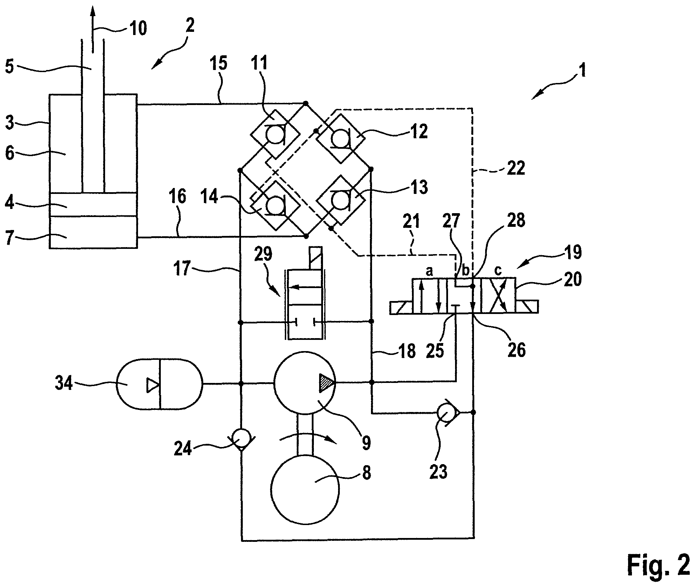

Im zweiten Ausführungsbeispiel gemäß Figur 2 ist eine direkte fluidleitende Verbindung zwischen der Druckseite der Pumpe 9 und der Niederdruckseite der Pumpe 9, also zwischen dem Pumpenausgang und dem Pumpeneingang vorgesehen. In dieser direkten Verbindung ist ein erstes Zusatzventil 29 angeordnet. Mit diesem ersten Zusatzventil 29 kann die direkte Verbindung wahlweise gesperrt oder freigegeben werden. Bei Freigabe des Fluidstroms über die direkte Verbindung kann die Pumpe 9 auf Drehzahl gehalten werden. Der Fluidstrom kann zumindest teilweise über das erste Zusatzventil 29 zum Pumpeneingang zurückfließen. Dadurch lässt sich der Öldruck feinfühlig und hochdynamisch regeln, da die Pumpe 9 nicht aus dem Stillstand beschleunigt werden muss. Optimalerweise wird das erste Zusatzventil 29 als Proportionalventil ausgeführt.

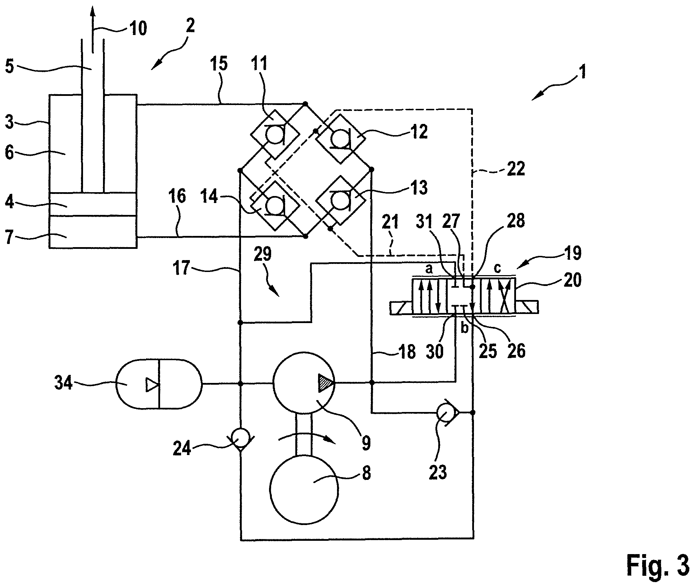

Im dritten Ausführungsbeispiel nach Figur 3 gibt es ebenfalls eine direkte fluidleitende Verbindung zwischen dem Pumpenausgang und dem Pumpeneingang. Allerdings ist hier die Funktion des ersten Zusatzventils 29 in das Wegeventil 20 integriert. Hierzu ist das Wegeventil 20 als 6/3-Wegeventil ausgebildet. Insbesondere handelt es sich um ein Proportionalwegeventil. Für diese Ausführung des Wegeventils 20 sind zusätzlich ein fünfter Anschluss 30 und ein sechster Anschluss 31 am Wegeventil 20 vorgesehen. Der fünfte Anschluss 30 ist mit der Druckseite der Pumpe 9 verbunden. Der sechste Anschluss 31 führt direkt zur Niederdruckseite der Pumpe 9. In den Schaltstellungen a und c erfolgt eine direkte Verbindung zwischen der Druck- und Niederdruckseite der Pumpe 9. Diese direkte Verbindung ist dabei insbesondere proportional regelbar, sodass die Durchflussmenge geregelt werden kann.

Alternativ zur Verwendung des ersten Zusatzventils 29 oder zur Ausbildung des Wegeventils 20 als 6/3-Wegeventil ist es auch möglich, das in Figur 1 dargestellte 4/3-Wegeventil 20 als Proportionalventil auszuführen. Bei dieser Ausführung als Proportionalventil ist es möglich, einen direkten Rückfluss von der Druckseite zur Niederdruckseite über das erste und zweite Ventil 11, 12 oder das dritte und vierte Ventil 13, 14 zu ermöglichen.

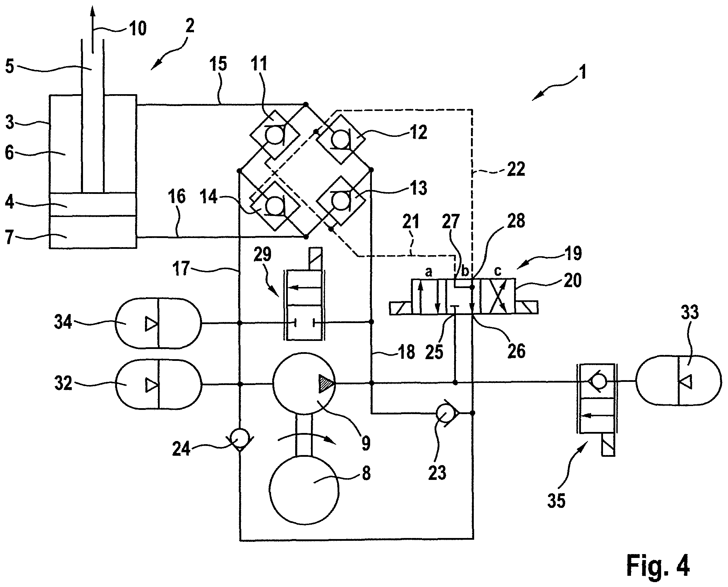

Das vierte Ausführungsbeispiel gemäß Figur 4 zeigt einen ersten Druckspeicher 32, der an die Niederdruckseite der Pumpe 9 angeschlossen ist. Ein zweiter Druckspeicher 33 ist an die Druckseite der Pumpe 9 angeschlossen. Am Eingang des zweiten Druckspeichers 33 ist ein zweites Zusatzventil 35 angeordnet. In einer ersten Schaltstellung des zweiten Zusatzventils 35 sperrt ein Rückschlagventil den Fluidstrom aus dem zweiten Druckspeicher 33 in Druckleitung 18. Die zweite Schaltstellung des zweiten Zusatzventils 35 ermöglicht einen Fluidfluss zwischen der Druckleitung 18 und dem zweiten Druckspeicher 33. Mittels der beiden Druckspeicher 32, 33 kann Pumpenleistung zwischengespeichert werden. Dies dient insbesondere zur Druckversorgung bei Lastspitzen.

Ferner zeigen die Figuren 1 bis 5 einen weiteren Druckspeicher 34. Der weitere Druckspeicher 34 befindet sich an der Niederdruckseite der Pumpe 9. Der weitere Druckspeicher 34 dient üblicherweise zum Ausgleich des verdrängten Volumens beim Einfedern der Kolbenstange 5.

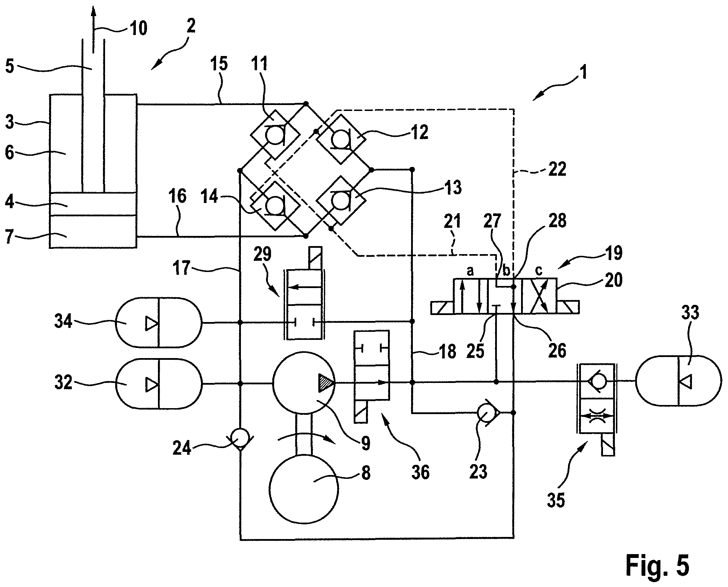

Figur 5 zeigt mit dem fünften Ausführungsbeispiel ein drittes Zusatzventil 36, mit dem der Pumpeneingang abgesperrt werden kann. Ferner befindet sich hier in der zweiten Schaltstellung des zweiten Zusatzventils 35 eine Drossel. In bestimmten Fahrsituationen, in denen die Dämpfereinheit 2 stetig Haltekraft erzeugen muss, kann die elektrische Maschine 8 abgeschaltet werden. Gleichzeitig wird über das dritte Zusatzventil 36 der Pumpeneingang gesperrt. Über die Drossel im zweiten Zusatzventil 35 wirkt der zweite Druckspeicher 33 als Tragfeder, wobei die Drossel dämpfend wirkt. Das dritte Zusatzventil 36 kann auch in den anderen Ausführungsbeispielen verwendet werden.

### Bezugszeichenliste:

- 1: aktives Dämpfersystem
- 2: Dämpfereinheit
- 3: Zylinder
- 4: Kolben
- 5: Kolbenstange
- 6: erste Kammer
- 7: zweite Kammer
- 8: elektrische Maschine
- 9: Pumpe
- 10: Ausfederrichtung
- 11, 12, 13, 14: Ventile (Rückschlagventile)
- 15: erste Leitung
- 16: zweite Leitung
- 17: Niederdruckleitung
- 18: Druckleitung
- 19: Steuereinheit
- 20: Wegeventil
- 21: erste Steuerleitung
- 22: zweite Steuerleitung
- 23: erstes Zusatzrückschlagventil
- 24: zweites Zusatzrückschlagventil
- 25: erster Anschluss
- 26: zweiter Anschluss
- 27: dritter Anschluss
- 28: vierter Anschluss
- 29: erstes Zusatzventil
- 30: fünfter Anschluss
- 31: sechster Anschluss
- 32: erster Druckspeicher
- 33: zweiter Druckspeicher
- 34: weiterer Druckspeicher
- 35: zweites Zusatzventil
- 36: drittes Zusatzventil
- a, b, c: Schaltstellungen
- 100: Dämpfereinheit nach dem Stand der Technik
- 101: Rückschlagventile nach dem Stand der Technik
- 102: Pumpe nach dem Stand der Technik
- 103: Generator nach dem Stand der Technik
- 104: elektrische Maschine nach dem Stand der Technik
- 105: Pumpe nach dem Stand der Technik

## Patentansprüche

1. Aktives Dämpfersystem (1) für ein Fahrzeug, insbesondere Kraftfahrzeug, umfassend:
- eine Dämpfereinheit (2) mit einem Zylinder (3), einem im Zylinder (3) geführten Kolben (4) und einer mit dem Kolben (4) verbundenen Kolbenstange (5), wobei der Kolben (4) den Zylinder (3) in einer ersten Kammer (6) und eine zweite Kammer (7) unterteilt, und wobei die Dämpfereinheit (2) zur Anordnung zwischen einer Karosserie und einem Rad des Fahrzeuges ausgebildet ist,
- eine Pumpe (9), vorzugsweise Hydraulikpumpe, zum Verändern der Drücke in den beiden Kammern (6, 7) und zum Bewegen des Kolbens (4),
- ein erstes Ventil (11) und ein mit dem ersten Ventil (11) in Reihe geschaltetes zweites Ventil (12),
- ein drittes Ventil (13) und ein mit dem dritten Ventil (13) in Reihe geschaltetes viertes Ventil,
- wobei das erste und zweite Ventil (11, 12) parallel zum dritten und vierten Ventil (13, 14) geschaltet sind,
- wobei zwischen dem ersten Ventil (11) und dem zweiten Ventil (12) eine fluidführende erste Leitung (15) zur ersten Kammer (6) führt,
- wobei zwischen dem dritten Ventil (13) und dem vierten Ventil (14) eine fluidführende zweite Leitung (16) zur zweiten Kammer (7) führt,
- wobei zwischen dem ersten Ventil (11) und dem vierten Ventil (14) eine Niederdruckseite der Pumpe (9) angeschlossen ist,
- wobei zwischen dem zweiten Ventil (12) und dem dritten Ventil (13) eine Druckseite der Pumpe (9) angeschlossen ist,
- wobei das erste Ventil (11), das zweite Ventil (12), das dritte Ventil (13) und das vierte Ventil (14) zum wahlweisen Sperren und Freigeben des Fluidflusses schaltbar sind, und
- **dadurch gekennzeichnet, dass** eine Steuereinheit (19) zum Schalten der vier Ventile (11, 12, 13, 14) vorgesehen ist, sodass im elektromotorischen Betrieb und im generatorischen Betrieb die Pumpe (9), sowohl beim Ein- also auch beim Ausfedern, in derselben Richtung dreht.

2. Aktives Dämpfersystem nach Anspruch 1, **dadurch gekennzeichnet, dass** das erste Ventil (11) und/oder das zweite Ventil (12) und/oder das dritte Ventil (13) und/oder das vierte Ventil (14) Rückschlagventile sind, die wahlweise sperrbar und entsperrbar sind.

3. Aktives Dämpfersystem nach einem der vorhergehenden Ansprüche, **gekennzeichnet durch** eine elektrische Maschine (8), die zum Antreiben der Pumpe (9) elektromotorisch betreibbar ist, und die zum Erzeugen elektrischer Energie **durch** die Pumpe (9) generatorisch betreibbar ist.

4. Aktives Dämpfersystem nach einem der vorhergehenden Ansprüche, **dadurch gekennzeichnet, dass** mittels der Steuereinheit (19) jeweils zwei Ventile (11, 12, 13, 14) paarweise ansteuerbar sind, sodass das erste Ventil (11) und das dritte Ventil (13) stets die gleiche Schaltstellung aufweisen, und sodass das zweite Ventil (12) und das vierte Ventil (14) stets die gleiche Schaltstellung aufweisen.

5. Aktives Dämpfersystem nach einem der vorhergehenden Ansprüche, **dadurch gekennzeichnet, dass** die Steuereinheit (19) zum Schalten der vier Ventile (11, 12, 13, 14) ein Wegeventil (20) umfasst, das über Steuerleitungen (21, 22) an die vier Ventile (11, 12, 13, 14) angeschlossen ist und über eine Druckleitung an die Druckseite der Pumpe (9) angeschlossen ist.

6. Aktives Dämpfersystem nach einem der vorhergehenden Ansprüche, **gekennzeichnet durch** eine fluidleitende direkte, mittels der Steuereinheit (19) schaltbare Verbindung zwischen der Druckseite und der Niederdruckseite der Pumpe (9), unter Umgehung der vier Ventile (11, 12, 13, 14).

7. Aktives Dämpfersystem nach Anspruch 6, **dadurch gekennzeichnet, dass** die Schaltbarkeit der direkten Verbindung in das Wegeventil (20) integriert ist, oder dass für die Schaltbarkeit der direkten Verbindung ein erstes Zusatzventil (29) angeordnet ist.

8. Aktives Dämpfersystem nach einem der vorhergehenden Ansprüche, **gekennzeichnet durch** einen ersten Druckspeicher (32), der zwischen dem ersten Ventil (11) und dem vierten Ventil (14) angeschlossen ist, und einem zweiten Druckspeicher (33), der zwischen dem zweiten Ventil (12) und dem dritten Ventil (13) angeschlossen ist.

9. Aktives Dämpfersystem nach Anspruch 8, **gekennzeichnet durch** ein zweites Zusatzventil (35) zum Steuern des Zu- und Abflusses am zweiten Druckspeicher (33) und/oder ein drittes Zusatzventil (36) zum Absperren der Druckseite der Pumpe (9).

## Claims

1. An active damper system (1) for a vehicle, especially a motor vehicle, comprising:
- a damper unit (2) having a cylinder (3), a piston (4) which is guided in the cylinder (3), and a piston rod (5) which is connected to the piston (4), wherein the piston (4) divides the cylinder (3) into a first chamber (6) and a second chamber (7), and wherein the damper unit (2) is configured for arrangement between a vehicle body and a wheel of the vehicle,
- a pump (9), preferably a hydraulic pump, for changing the pressures in the two chambers (6, 7) and for moving the piston (4),
- a first valve (11) and a second valve (12) which is connected in series with the first valve (11),
- a third valve (13) and a fourth valve which is connected in series with the third valve (13),
- wherein the first and second valves (11, 12) are connected in parallel with the third and fourth valves (13, 14),
- wherein a fluid-conducting first line (15) leads between the first valve (11) and the second valve (12) to the first chamber (6),
- wherein a fluid-conducting second line (16) leads between the third valve (13) and the fourth valve (14) to the second chamber (7),
- wherein a low-pressure side of the pump (9) is connected between the first valve (11) and the fourth valve (14),
- wherein a pressure side of the pump (9) is connected between the second valve (12) and the third valve (13),
- wherein the first valve (11), the second valve (12), the third valve (13), and the fourth valve (14) are switchable for selectively blocking and releasing the fluid flow, and
- **characterised in that** a control unit (19) for switching the four valves (11, 12, 13, 14) is provided, so that, in electric motor operation and in generator operation, the pump (9) rotates in the same direction, both during compression and during rebound.

2. An active damper system according to claim 1, **characterised in that** the first valve (11) and/or the second valve (12) and/or the third valve (13) and/or the fourth valve (14) are check valves which can be closed and opened selectively.

3. An active damper system according to one of the preceding claims, **characterised by** an electric machine (8) which is operable as an electric motor in order to drive the pump (9), and which is operable as a generator in order to generate electrical energy by way of the pump (9).

4. An active damper system according to one of the preceding claims, **characterised in that** two valves (11, 12, 13, 14) in each case are controllable in pairs by means of the control unit (19), so that the first valve (11) and the third valve (13) always have the same switching position, and so that the second valve (12) and the fourth valve (14) always have the same switching position.

5. An active damper system according to one of the preceding claims, **characterised in that** the control unit (19) for switching the four valves (11, 12, 13, 14) comprises a directional valve (20) which is connected via control lines (21, 22) to the four valves (11, 12, 13, 14) and is connected via a pressure line to the pressure side of the pump (9).

6. An active damper system according to one of the preceding claims, **characterised by** a fluid-conducting direct connection, which is switchable by means of the control unit (19), between the pressure side and the low-pressure side of the pump (9), bypassing the four valves (11, 12, 13, 14) .

7. An active damper system according to claim 6, **characterised in that** the switchability of the direct connection is integrated into the directional valve (20), or **in that** a first additional valve (29) is arranged for the switchability of the direct connection.

8. An active damper system according to one of the preceding claims, **characterised by** a first pressure accumulator (32) which is connected between the first valve (11) and the fourth valve (14), and a second pressure accumulator (33) which is connected between the second valve (12) and the third valve (13).

9. An active damper system according to claim 8, **characterised by** a second additional valve (35) for controlling the inflow and outflow at the second pressure accumulator (33) and/or a third additional valve (36) for closing off the pressure side of the pump (9).

## Revendications

1. Système d'amortissement actif (1) destiné à un véhicule, en particulier à un véhicule automobile comportant :
- une unité d'amortissement (2) comprenant un cylindre (3), un piston (4) guidé dans le cylindre (3) et une tige de piston (5) reliée au piston (4), le piston (4) subdivisant le cylindre (3) en une première chambre (6) et en une seconde chambre (7) et l'unité d'amortissement (2) étant réalisée pour être installée entre la carrosserie et une roue du véhicule,
- une pompe (9), de préférence une pompe hydraulique permettant de modifier la pression dans les deux chambres (6, 7) et de déplacer le piston (4),
- une première soupape (11) et une seconde soupape (12) montée en série sur la première soupape (11),
- une troisième soupape (13) et une quatrième soupape montée en série sur la troisième soupape (13),
- la première soupape et la seconde soupape (11, 12) étant montée en parallèle sur la troisième soupape et la quatrième soupape (13, 14),
- entre la première soupape (11) et la seconde soupape (12) une première conduite (15) de circulation de fluide conduisant à la première chambre (6),
- entre la troisième soupape (13) et la quatrième soupape (14) une seconde conduite (16) de circulation de fluide conduisant à la seconde chambre (7),
- le côté basse pression de la pompe (9) étant branché entre la première soupape (11) et la quatrième soupape (14),
- le côté pression de la pompe (9) étant branché entre la seconde soupape (12) et la troisième soupape (13),
- la première soupape (11), la seconde soupape (12), la troisième soupape (13) et la quatrième soupape (14) pouvant être commutées pour permettre de bloquer et de libérer sélectivement le flux de fluide,
**caractérisé en ce qu'**
il est prévu une unité de commande (19) permettant de commuter les quatre soupapes (11, 12, 13, 14) de sorte qu'en mode électro-motorisé ou en mode de générateur, la pompe (9) tourne dans le même sens lors d'une compression ou d'une détente.

2. Système d'amortissement actif conforme à la revendication 1,
**caractérisé en ce que**
la première soupape (11) et/ou la seconde soupape (12) et/ou la troisième soupape (13) et/ou la quatrième soupape (14) est(sont) une(des) soupape(s) antiretour qui peut(peuvent) être sélectivement bloquée(s) et débloquée(s).

3. Système d'amortissement actif conforme à l'une des revendications précédentes,
**caractérisé par**
une machine électrique (8) qui peut être actionnée par voie électro-motorisée pour permettre d'entraîner la pompe (9) et qui peut être actionnée en tant que générateur par l'intermédiaire de la pompe (9) pour permettre de produire de l'énergie électrique.

4. Système d'amortissement actif conforme à l'une des revendications précédentes,
**caractérisé en ce qu'**
au moyen de l'unité de commande (19) deux soupapes (11, 12, 13, 14) respectives peuvent être commandées par paire de sorte que la première soupape (11) et la troisième soupape (13) aient toujours la même position de commutation et que la seconde soupape (12) et la quatrième soupape (14) aient toujours la même position de commutation.

5. Système d'amortissement actif conforme à l'une des revendications précédentes,
**caractérisé en ce que**
pour permettre la commutation des quatre soupapes (11, 12, 13, 14) l'unité de commande (19) comporte, un distributeur (20) qui est connecté aux quatre soupapes (11, 12, 13, 14), par l'intermédiaire de conduites de commande (21, 22) et est connecté au côté pression de la pompe (9) par l'intermédiaire d'une conduite de pression.

6. Système d'amortissement actif conforme à l'une des revendications précédentes,
**caractérisé par**
une liaison de communication fluidique directe commutable au moyen de l'unité de commande (19) entre le côté pression et le côté basse pression de la pompe (9) en contournant les quatre soupapes (11, 12, 13, 14).

7. Système d'amortissement actif conforme à la revendication 6,
**caractérisé en ce que**
la possibilité de commutation de la liaison directe est intégrée dans le distributeur (20) ou, pour permettre la commutation de la liaison directe, une première soupape additionnelle (29) est installée.

8. Système d'amortissement actif conforme à l'une des revendications précédentes,
**caractérisé par**
un premier accumulateur de pression (32) qui est connecté entre la première soupape (11) et la quatrième soupape (14) et un second accumulateur de pression (33) qui est connecté entre la seconde soupape (12) et la troisième soupape (13).

9. Système d'amortissement actif conforme à la revendication 8,
**caractérisé par**
une seconde soupape additionnelle (35) pour permettre de commander l'entrée et la sortie du flux dans le second accumulateur de pression (33) et/ou une troisième soupape additionnelle (36) pour permettre de bloquer le côté pression de la pompe (9).
